# EUROPEAN PATENT APPLICATION

(11) **EP 4 793 905 A1**
(43) Date of publication of application: **19.08.2026**
(21) Application number: 25305197.3
(22) Date of filing: 12.02.2025
(51) Int. Cl.: G06V 20/52, G06V 10/62, G06V 10/82, G06V 20/40

(54) **METHOD AND DEVICE FOR PREDICTING AN ANOMALY IN A VIDEO USING A MACHINE LEARNING MODEL**

(71) Applicant: TOYOTA JIDOSHA KABUSHIKI KAISHA, Toyota-shi, Aichi-ken, 471-8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); KONG, Quan, CHUO-KU, TOKYO, 103-0022 (JP); MAJHI, Snehashis, 06902 VALBONNE (FR); BREMOND, François, 06902 VALBONNE (FR)
(74) Representative: Cabinet Beau de Loménie

(57) **Abstract**

The present invention relates to a method and device for predicting an anomaly in a video (VID) using a machine learning model (MOD). More particularly, the proposed method and device predict one or more anomaly scores (AS) for future frames (Fₜ₀₊₁,...,F_{t0+N'}) of a video (VID) following a given time instant (t0) using a machine learning model (MOD) based only on past frames (F_{t0-N},...,Fₜ₀) of the video (VID) preceding the given time instant (t0).

## Description

### BACKGROUND OF THE INVENTION

### 1. Field of the Invention

The present invention relates to the field of video processing using machine learning and, especially, to the field of video anomaly prediction. More particularly, the present invention relates to a method and device for predicting an anomaly in a video using a machine learning model. It also relates to a method for training a machine learning model, a surveillance system, a computer program, and a storage medium. The present invention is particularly advantageous for implementing autonomous surveillance systems, but such an application is only given as an illustrative example and should not limit the invention.

### 2. Description of Related Art

The present invention lies in particular in the context of predicting abnormal human behaviors in videos. Hereinafter, we refer to video anomaly prediction as determining, based on past frames of a video preceding a given time instant, the presence of an anomaly in future frames of the video following the given time instant. Such a computer-vision task is critical to numerous applications, including autonomous surveillance systems.

There are numerous existing solutions for detecting anomalies in videos. In particular, recent developments in machine learning techniques have led to significant improvements in video anomaly detection. However, these solutions can only detect anomalies when they occur (online anomaly detection) or when they have already occurred (offline anomaly detection), but cannot predict them before they occur.

Also, there exist solutions for anticipating the actions of people in videos. These solutions use long short-term memory/recurrent neural network architectures or transformers. However, these solutions are only suitable for simple activities and simple datasets, which are not applicable to real-world videos where several actions occur at the same time. The existing action anticipation solutions do not provide satisfying performance for anticipating anomalies in videos, especially in terms of reliability.

Therefore, there exists a need for a solution that can reliably predict the presence of an anomaly in a video

### SUMMARY OF THE INVENTION

The present invention has been made in the light of the above problems.

According to an aspect, the invention provides a computer-implemented method for predicting one or more anomaly scores for future frames of a video following a given time instant using a machine learning model based only on (i.e., taking only as input) past frames of the video preceding the given time instant, wherein:
- a modeling module of the machine learning model (also referred to as the "normalcy uncertainty latent learner"):
   o computes latent weights W₁ using a multi-layer perceptron based on (i.e., taking as input) embeddings e_{T} of the past frames, and computes latent weights W₂ based on the opposite of the latent weights W₁
   o computes embeddings θ₁, θ₂ of the past frames using attention modules based on (i.e., taking as input) embeddings β₁, β₂ being products between the embeddings e_{T} of the past frames and the latent weights W₁, W₂ respectively, and
- the machine learning model:
   o computes the anomaly scores for the future frames based on the embeddings θ₁, θ₂ of the past frames.

Within the context of the invention, we use the term "anomaly" to refer to a class of events considered as abnormal with respect to reference data. For example, the following events can be considered as anomalies: an assault, an arrest, a robbery.

Furthermore, the term "multi-layer perceptron" refers to a feedforward neural network with multiple layers. We use the term "embeddings of the past frames" to refer to numerical representations of the past frames of the video. And, the term "attention modules" refers to a module using an attention mechanism, for instance a module including a multi-head attention module.

The proposed solution allows predicting reliably the presence of an anomaly in future frames of a video based only on past frames of the video.

This follows from the machine learning model including the modeling module. This module models and captures the relationships between past observations (in past frames) and future anomalies (in future frames). To do so, the modeling module uses not only attention modules, but also a relevant-opponent mechanism.

The modeling module computes relevant latent weights W₁ using a multilayer perceptron (an uncertainty estimator) and computes opponent latent weights W₂ based on the opposite of latent weights W₁ (e.g., W₂=1-W₁). If latent weights W₁ and W₂ are equivalent, there is no correlation between past observations and future events. On the contrary, if latent weights W₁ and W₂ are divergent, past observations are correlated with future events.

The modeling module then obtains, using an attention module, the embeddings θ₁ based on the product β₁ between the past frames embeddings e_{T} and the relevant latent weights W₁. It also obtains, using another attention module, the embeddings θ₂ based on the product β₂ between the embeddings e_{T} and the opponent latent weights W₂. The embeddings θ₁, θ₂ thereby encode the relationships between past observations and future events. This allows predicting reliably anomalies in the future frames of the video.

The experimental results confirm that the proposed solution outperforms existing solutions, as it predicts more reliably the presence of an anomaly in future frames of a video. This performance gain results, in particular, from the enhanced modeling of the relationships between past observations (i.e., in the past frames) and future anomalies (i.e., in the future frames) in the proposed solution.

Therefore, the present invention provides a solution that can reliably predict the presence of an anomaly in future frames of a video. This allows implementing preventive measures to minimize causes and damages.

In an embodiment, a temporal interaction module of the machine learning model:
o computes scene embeddings τ₁ using a self-attention module of the temporal interaction module based on (taking as input) a scene-level feature map F_{S} of the past frames,
o computes object embeddings τ₂ using a self-attention module of the temporal interaction module based on an object feature map F_{O} of the past frames, and
o computes the embeddings e_{T} of the past frames using a cross-attention module based on (taking as input) the scene embeddings τ₁ and the object embeddings τ₂.

Within the context of the invention, we use the term "self-attention module" to refer to an attention module taking as input only a single embedding and combining the latter with a position embedding, and the term "cross-attention module" to refer to an attention module taking as input multiple embeddings. Example implementations of these modules are presented hereinafter.

In this embodiment, the proposed machine learning model uses a temporal interaction module. By encoding the cross-correlation between object-level representations (fine grained) and scene-level representations (contextual), this module allows learning the temporal interactions between the filmed scene and the objects in it. This module therefore contributes to learning discriminative representations for predicting the presence of an anomaly in future frames based on past normal observations.

In an embodiment, an object interaction module of the machine learning model:
o computes object-level textual embeddings Θ₁ using a self-attention module of the object interaction module based on (taking as input) an object-level textual feature map Fₜₓₜ of the past frames,
o computes object embeddings Θ₂ using a self-attention module of the temporal interaction module based on (taking as input) object feature map F_{O} of the past frames,
o obtains embeddings e_{O} of the past frames using a cross-attention module based on (taking as input) the object-level textual embeddings Θ₁ and object embedding Θ₂.

And, the modeling module of the machine learning model:
o computes the embeddings θ₁, θ₂ of the past frames using the cross-attention modules based on (taking as input) respectively the embeddings β₁, β₂ and the embeddings e_{O} of the past frames.

Here, the term "object feature map" refers to a feature map of the objects present in the past frames of the video, and the term "object-level textual feature map" refers to a feature map of the text labels of the objects present in the past frames of the video.

In this embodiment, the proposed machine learning model uses an object interaction module. By encoding the cross-correlation between object-level representations (fine-grained) and object textual representations (contextual), this module allows salient object features to be highlighted among many irrelevant features by encoding their spatial interactions with the environment. This module therefore contributes to learning discriminative representations for predicting anomalies in future frames based on past normal observations.

It should also be noted that the proposed machine learning model combines the temporal interaction module and the object interaction module. This allows encoding both scene-level temporal context and object-level spatial interactions, which provides a detailed understanding from broader scene dynamics to fine object interactions.

In an embodiment, the machine learning model (MOD) comprises:
- an encoder (also referred to as the "past encoder") comprising the modeling module (and comprising the temporal and object interaction modules, where applicable), and
- a decoder (also referred to as the "future decoder") computing the anomaly scores based on the embeddings θ₁, θ₂ of the past frames provided by the encoder.

Here, the proposed machine learning model uses an encoder-decoder structure. This structure allows learning discriminative representations of the past frames of the video (the embeddings θ₁, θ₂), which can be used to predict the presence of an anomaly in future frames of the video. This contributes to the reliable prediction of anomalies in videos.

In an embodiment, the decoder of the machine learning model:
o computes embeddings π₁, π₂ using self-attention modules based on (taking as input] tokens (also referred to as "anticipation queries") respectively associated with different classes of anomalies,
o computes embeddings Δ₁ and Δ₂ using cross-attention modules based on (taking as input) respectively the embeddings θ₁, θ₂ of the past frames and the embeddings π₁, π₂, and
o computes the anomaly scores for the future frames using a classifier based on (taking as input a concatenation of) the embeddings Δ₁ and Δ₂.

In this embodiment, the decoder uses self-attention and cross-attention modules to learn the relationships between the past observations and future anomalies The proposed decoder structure contributes to predicting reliably the presence of an anomaly in the future frames of the video.

In an embodiment, the number of past frames used (by the machine learning model) to predict the anomaly scores for the future frames is comprised between 150 and 250.

The experimental results show that the most reliable predictions of future anomalies in future frames of the video are obtained by using between 150 and 250 past frames.

In an embodiment, the predicted anomaly scores are representative of the likelihood of one or more anomalies involving humans in future frames of the video.

It should be noted that anomalies involving human beings, such as aggression or a robbery, present early trends in the behavior of the human beings. The machine learning model used in the proposed solution allows learning distinctive representations of these early behavioral trends. This allows reliably predicting, on the basis of past observations, the presence of anomalies involving people in future frames.

According to another aspect, the invention provides a computer-implemented method comprising:
- a step of predicting, using the anomaly prediction method conforming to the invention, one or more anomaly scores for future frames of a video following a given time instant based only on past frames of the video preceding the given time instant, and
- a step of generating an alert if (and only if) one of the predicted anomaly scores exceeds a threshold.

The proposed surveillance method allows to reliably determines that an anomaly is about to occur based on the anomaly scores predicted by the proposed machine learning model. This allows alerting the user that an anomaly is about to occur, and thus to implement preventive measures in a timely manner.

According to another aspect, the invention provides a computer-implemented method for training a machine learning model (for predicting anomaly scores for future frames of a video based on past frames of the video), the method comprising:
- a step of predicting one or more anomaly scores for future frames of reference videos using the anomaly prediction method conforming to the invention,
- a step of evaluating a loss function L using the predicted anomaly scores and labels of the reference videos, and
- a step of updating parameters of the machine learning model to minimize the loss function L

The proposed training method allows optimizing the machine learning model to reliably predict, based on the past frames of a video, the appearance of anomalies in the future frames of the video.

The training method may comprise one or more iterations of each of its steps.

In an embodiment, the loss function L is based on a loss function L_{U} (also referred to as the "calibration loss function") comprising differences between the predicted anomaly scores and respectively the embeddings θ₁, θ₂ provided by the modeling module of the machine learning model.

In an embodiment, the loss function L is based on a loss function L_{A} (also referred to as the "anticipation action loss function") based on a cross entropy between the predicted anomaly scores and labels of the reference videos.

These embodiments contribute to optimizing the machine learning model to reliably predict, based on the past frames of a video, the appearance of anomalies in the future frames of the video.

In particular, the calibration loss function L_{U} ensures improved calibration of the relevant and opponent embeddings θ₁, θ₂ provided by the modeling module, in order to reduce the differences between these embeddings and the anomaly scores predicted for future frames.

According to another aspect, the invention provides a machine learning model for predicting one or more anomaly scores for future frames of a video subsequent to a given time instant based only on (taking only as input) past frames of the video preceding the given time instant, wherein:
- a modeling module of the machine learning model is configured to:
   o compute latent weights W₁ using a multi-layer perceptron based on (taking as input) embeddings e_{T} of the past frames, and computes latent weights W₂ based on the opposite of the latent weights W₁,
   o compute embeddings θ₁, θ₂ of the past frames using attention modules based on (taking as input) embeddings β₁, β₂ being products between the embeddings e_{T} of the past frames and the latent weights W₁, W₂ respectively, and
- the machine learning model is configured to:
   o compute the anomaly scores for the future frames based on the embeddings θ₁, θ₂ of the past frames.

The proposed machine learning model can be configured to implement any steps of the anomaly prediction method presented herein.

In an embodiment, the machine learning model has been trained using the training method conforming to the invention.

Further, the invention extends to a computer-readable medium having stored thereon a program for implementing a machine learning model conforming to the invention. In addition, the invention also provides a computer-readable medium having stored thereon data representative of a machine learning model conforming to the invention, such as hyperparameters and/or weights.

According to another aspect, the invention provides a device (also referred to as the "anomaly prediction device") comprising at least one processor and a memory, the device being configured to implement a machine learning model conforming to the invention.

The proposed device can be configured to implement any steps of the proposed methods presented herein. In particular, the proposed device can be configured to implement any steps of the proposed method for predicting anomaly scores in future frames of a video, and can also be configured to generate an alarm if an anomaly score exceeds a threshold.

According to another aspect, the invention provides a surveillance system comprising: a camera for obtaining a video; and an anomaly prediction device conforming to the invention for analysing the video (VID).

In an embodiment, the surveillance system further comprises a restitution device configured to output an alarm signal provided by the anomaly prediction device. The restitution device may comprise a display and/or a speaker.

According to another aspect, the invention provides a computer program comprising instructions which, when the program is executed by at least one processor or a computer, cause said at least one processor or computer to implement a method conforming to the invention.

It should be noted that the computer programs referred to here may use any programming language, and be in the form of source code, object code, or code intermediate between source code and object code, such as in a partially compiled form, or in any other desirable form.

According to another aspect, the invention provides a computer-readable medium having stored thereon the computer program conforming to the invention.

The computer-readable medium referred to in this statement may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated and adapted to execute a method as described above or to be used in the execution of such method.

It should be emphasized that the proposed surveillance method, training method, machine learning model, anomaly prediction device, surveillance system, computer program, and computer-readable medium present the advantages described above in relation with the proposed anomaly prediction method.

### BRIEF DESCRIPTION OF THE DRAWINGS

Features, advantages, and technical and industrial significance of exemplary embodiments of the invention will be described below with reference to the accompanying drawings, in which like reference signs denote like elements, and wherein:
FIG. 1 illustrates the architecture of a surveillance system according to an embodiment of the invention,
FIGS. 2A and 2B illustrate the architecture of a machine learning model and steps of a video surveillance method according to an embodiment of the invention,
FIG. 3 illustrates the architecture of a temporal interaction module of the machine learning model according to an embodiment of the invention,
FIG. 4 illustrates the architecture of an object interaction module of the machine learning model according to an embodiment of the invention,
FIG. 5 illustrates the architecture of a modeling module of the machine learning model according to an embodiment of the invention,
FIG. 6 illustrates the architecture of a decoder of the machine learning model according to an embodiment of the invention,
FIGS. 7A and 7B illustrate the architectures of a self-attention module and a cross-attention module of the machine learning model according to an embodiment of the invention, and
FIGS. 8A and 8B illustrate steps of a method for training a machine learning model according to an embodiment of the invention.

### DETAILED DESCRIPTION OF EXAMPLE EMBODIMENTS

The present invention is particularly advantageous for implementing a surveillance system. The following description of the invention will refer to this particular application, which is provided only as an illustrative example and should not limit the invention.

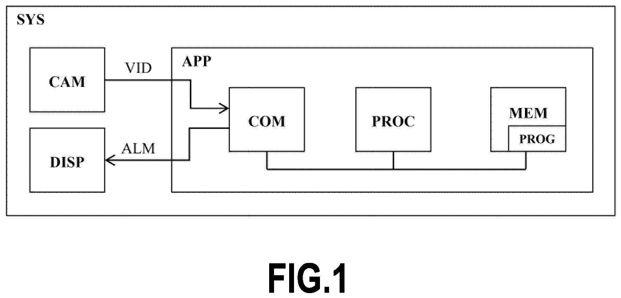

**FIG. 1** illustrates the architecture of a surveillance system according to an embodiment of the invention.

The surveillance system SYS of FIG. 1 comprises: a camera CAM, an anomaly prediction device APP, and an output device DISP.

The camera CAM is configured to obtain (i.e., acquire) a video VID. The video VID may involve human beings.

The anomaly prediction device APP is configured to: predict an anomaly based on the video VID, and if an anomaly is predicted, provide an alarm signal ALM. The alarm signal ALM indicates that an anomaly has been predicted and, in addition, may comprise the images of the video VID.

The output device DISP is configured to output the alarm signal ALM. For instance, the output device DISP may comprise a display and/or a speaker. This output device DISP allows alerting a user that an anomaly is predicted. Thereby, timely anomaly prevention and investigation can be carried out.

The anomaly prediction device APP comprises at least one processing unit or processor PROC, and at least one memory MEM.

More particularly, the anomaly prediction device APP has, according to an embodiment, the hardware architecture of a computer. It may include a processor PROC, a random access memory, a read-only memory MEM, and a non-volatile memory. The memory MEM constitutes a storage medium conforming to the invention. The memory MEM is readable by processor PROC and stores a computer program PROG conforming to the invention. The computer program PROG comprises instructions for implementing the steps of a method conforming to the invention, when the computer program PROG is executed by the processor PROC.

According to the embodiment of FIG. 1, the device APP comprises a communication module COM configured to communicate with the camera CAM and/or the output device DISP. No limitation is attached to the nature of the communication interfaces between the devices APP, CAM, and DISP, which can be wired or wireless, and can implement any protocol known to the skilled person.

The program PROG implements a machine learning model for predicting an anomaly based on a video, and thus the different modules of the model. We present the architecture of the machine learning model and its operation in reference to the following figures.

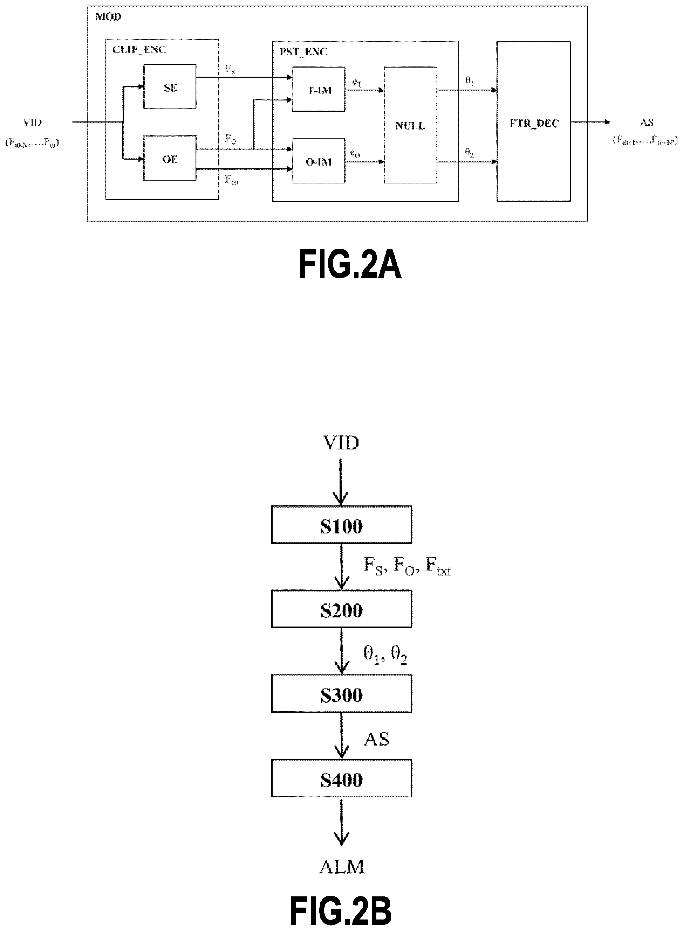

**FIGS. 2A and 2B** illustrate the architecture of a machine learning model and steps of a video surveillance method according to an embodiment of the invention.

Before presenting the proposed machine learning model MOD, it is important to emphasize that the proposed model MOD uses only past frames F_{t0-N},...,Fₜ₀ of the VID video preceding a given time instant t0 in order to predict the presence of anomalies in future frames Fₜ₀₊₁,...,F_{t0+N'} of the video following this given time instant t0.

The architecture of the proposed machine learning model MOD is represented in FIG. 2A. The proposed model MOD comprises (all or part of) the following modules: a feature extractor CLIP_ENC, a past encoder PST_ENC, and a future decoder FTR_DEC.

We describe the functions of these different modules in relation to the steps of the method of FIG. 2B. As shown in this figure, the proposed method comprises (all or part of) the steps S100-S400 implemented by the anomaly prediction device APP.

At step S100, the feature extractor CLIP_ENC extracts feature maps F_{S}, F_{O}, Fₜₓₜ of the past frames F_{t0-N},...,Fₜ of the video VID.

As shown on FIG. 2A, the feature extractor CLIP_ENC comprises a scene encoder SE and an object encoder OE.

On the one hand, the object encoder OE first extracts the frame-level panoptic masks with the corresponding text labels of k objects using a Mask2former module and stacks them along the temporal dimension. Then, the object encoder OE extracts object-level d0 dimensional vision language features from the CLIP Image and Text encoder to respectively obtain the object feature map ${F}_{O} ∈ {ℝ}^{t \times k \times d 0}$ and object-level textual feature map ${F}_{txt} ∈ {ℝ}^{t \times k \times d 0}$.

On the other hand, the scene encoder SE extracts d0 dimensional frame-level spatial features from the CLIP Image encoder and stacks them along the temporal dimension to obtain the scene feature map ${F}_{S} ∈ {ℝ}^{t \times d 0}$.

The Mask2former module is presented in Cheng et al., "Per-pixel classification is not all you need for semantic segmentation", 2021. And, the CLIP Image and Text encoder is presented in Radford et al., "Learning transferable visual models from natural language supervision", 2021*.*

At step S200, the past encoder PST_ENC computes embeddings θ₁, θ₂ of the past frames F_{t0-N},...,Fₜ₀ of the video VID based on the feature maps F_{S}, F_{O}, F_{Txt}. The past encoder PST_ENC is also referred to as the space-time interaction transformer.

In the embodiment of FIG. 2, the past encoder PST_ENC comprises several modules:

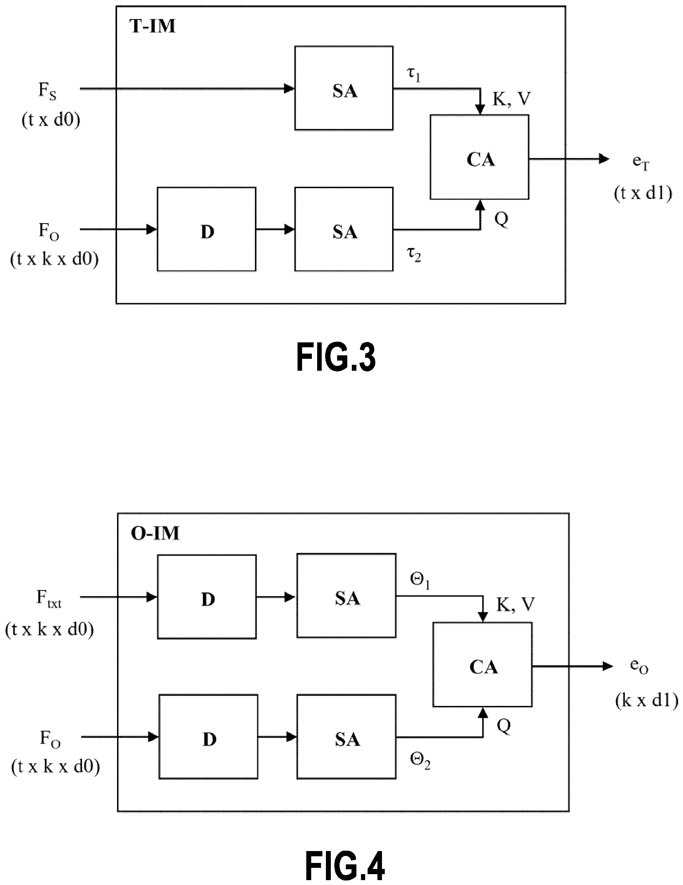

The past encoder PST_ENC comprises a temporal interaction module T-IM. This module takes as input the scene feature map Fs and the object feature maps F_{O}, and outputs embeddings e_{T} of past frames F_{t0-N},...,Fₜ. These embeddings e_{T} encode the cross-correlation between object-level representations (fine-grained) and scene-level representations (contextual). The architecture and operation of this module T-IM are detailed hereafter with reference to FIG. 3.

The past encoder PST_ENC also comprises an object interaction module O-IM. This modules takes as input the object feature map F_{O} and the object-level textual feature map F_{Txt}, and outputs embeddings e_{O} of past frames F_{t0-N},...,Fₜ₀. These embeddings e_{O} encode the cross-correlation between object-level representations (fine-grained) and textual representations of the object (contextual). The architecture and operation of this module O-IM are detailed hereafter with reference to FIG. 4.

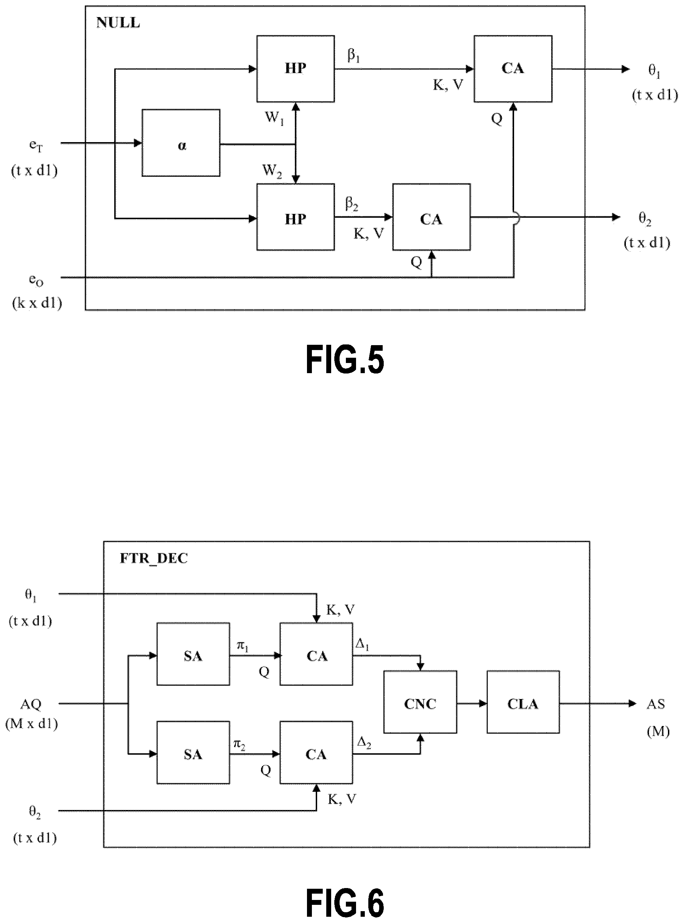

Also, the past encoder PST_ENC comprises a modeling module NULL (also referred to as the "normalcy uncertainty latent learner"). This module takes as input the embeddings e_{T} and e_{O}, and outputs embeddings θ₁, θ₂ of past frames F_{t0-N},...,Fₜ₀. These embeddings θ₁, θ₂ model the relationships between past observations (in past frames) and future anomalies (in future frames). The architecture and operation of this module NULL are detailed hereafter with reference to FIG. 5.

At step S300, the future decoder FTR_DEC computes anomaly scores AS for future frames Fₜ₀₊₁,...,F_{t0+N'} based on the embeddings θ₁, θ₂. The future decoder FTR_DEC uses the discriminative representations of the past frames (the embeddings θ₁, θ₂) to predict the presence of anomalies in future frames.

The future decoder FTR_DEC provides a plurality of anomaly scores AS. Specifically, it provides an anomaly score for each of the considered anomaly classes.

The anomaly scores AS are computed for future frames Fₜ₀,...F_{t0+N'} of the video VID posterior to the given time instant t0. The future frames Fₜ₀,...F_{t0+N'} may, for example, correspond to a future time period comprised between 1 and 8 seconds. This period may be comprised between 1-3 seconds (short predictions) or between 4-8 seconds (long predictions).

However, other embodiments could be envisaged in which a single anomaly score is obtained, or in which a plurality of scores is obtained for each of the future time periods considered.

The architecture and operation of the future decoder FTR_DEC are detailed hereafter with reference to FIG. 6.

At step S400, the anomaly prediction device APP determines whether or not an anomaly is about to occur.

For example, the device APP can predict an anomaly about to occur if (and only if) one of the predicted anomaly scores AS exceeds a threshold.

In a particular embodiment, the prediction of an anomaly in the video VID triggers the device APP to generate an alarm signal ALM. This allows to alert the user that an anomaly is about to occur, and thus to implement preventive measures in a timely manner.

Here, we have described the overall architecture of the proposed machine learning model MOD for predicting an anomaly in a video VID. Below, we detail the architecture and operation of interaction modules T-IM and O-IM. Then, we will detail those of the uncertainty module NULL.

**FIG. 3** illustrates the architecture of a temporal interaction module of the machine learning model according to an embodiment of the invention.

As previously introduced, the temporal interaction module T-IM takes as input the scene feature map F_{S} and the object feature map F_{O}, and outputs the embeddings e_{T} of past frames F_{t0-N},...,Fₜ₀. More specifically, in the embodiment of FIG. 3, the temporal interaction module T-IM proceeds as follows:

On the one hand, the temporal interaction module T-IM computes scene embeddings τ₁ using a self-attention module SA taking as input the scene-level feature map F_{S}.

On the other hand, it performs a pooling operation on the k-dimension of the object feature map F_{O} using a pooling module D. It then computes the object embeddings τ₂ using a self-attention module SA taking as input the object feature map Fo with reduced dimension.

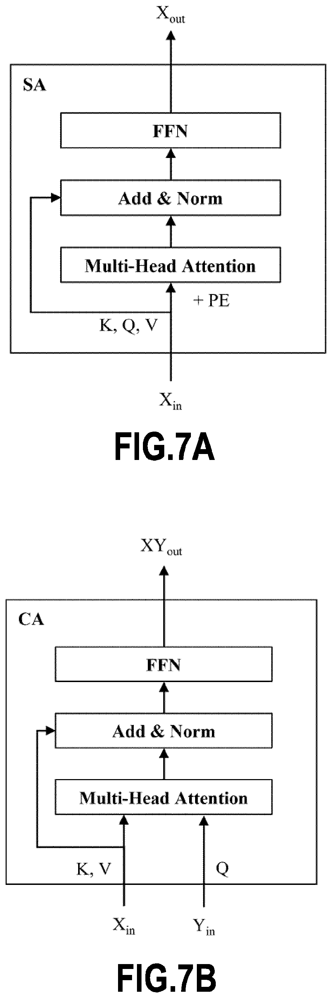

Then, the temporal interaction module T-IM computes the embeddings ${e}_{T} ∈ {ℝ}^{t \times d 1}$ using a cross-attention module CA taking as input the scene embeddings τ₁ (as key K and value V) and the object embeddings τ₂ (as query Q). The self-attention and cross-attention modules are detailed hereafter in reference to FIG. 7A and 7B.

The temporal interaction module T-IM encodes the cross-correlation between object-level representations (fine grained) and scene-level representations (contextual). Thereby, this module allows learning the temporal interactions between the filmed scene and the objects in it. We can refer to the embeddings e_{T} as scene-centric temporal interaction embeddings. The temporal interaction module T-IM module therefore contributes to learning discriminative representations for predicting anomalies.

In addition to the temporal interaction module T-IM, the proposed machine learning model MOD uses an object interaction module O-IM. We describe this module O-IM in reference to the following figure.

**FIG. 4** illustrates the architecture of an object interaction module of the machine learning model according to an embodiment of the invention.

As shown in this figure, the object interaction module O-IM takes as input the object feature map F_{O} and the object-level textual feature map Fₜₓₜ, and outputs embeddings e_{O} of past frames F_{t0-N},...,Fₜ₀. In the embodiment of FIG. 4, the object interaction module O-IM proceeds as follows:

The object interaction module O-IM performs a pooling operation on the k-dimension of the object-level textual feature map Fₜₓₜ using a pooling module D. It then computes object-level textual embeddings Θ₁ using a self-attention module SA based on an object-level textual feature map Fₜₓₜ with reduced dimension.

It also performs a pooling operation on the k-dimension of the object feature map F_{O} using a pooling module D. It then computes object embeddings Θ₂ using a self-attention module SA taking as input the object feature map F_{O} with reduced dimension.

Then, the object interaction module O-IM computes embeddings ${e}_{O} ∈ {ℝ}^{k \times d 1}$ using a cross-attention module CA taking as input the embeddings Θ₁ (*as key K, and value V*) and the embeddings Θ₂ (as query Q)

These embeddings e_{O} encode the cross-correlation between object-level representations (fine-grained) and textual representations of the object (contextual). Thereby, the object interaction module O-IM allows highlighting salient object features among many irrelevant features by encoding their spatial interactions with the environment. We can refer to the embeddings e_{O} as the object-centric spatial interaction embeddings. The object interaction module O-IM contributes to learning discriminative representations for predicting anomalies in future images compared with past normal observations.

As previously mentioned, the past encoder PST_ENC of the proposed machine learning model MOD also includes a modeling module NULL (the normalcy uncertainty latent learner) that uses the outputs of the interaction modules T-IM and O-IM. We describe this module NULL in reference to the following figure.

**FIG. 5** illustrates the architecture of a modeling module of the machine learning model according to an embodiment of the invention.

The modelling module NULL (the normalcy uncertainty latent learner) takes as input embeddings e_{T} and e_{O} respectively provided by the interaction modules T-IM and O-IM, and outputs the embeddings θ₁, θ₂. In the embodiment of FIG. 5, the modeling module NULL proceeds as follows:

First, it computes relevant latent weights ${W}_{1} ∈ {ℝ}^{t \times d 1}$W₁ using a multi-layer perceptron α taking as input the embeddings e_{T}. In this embodiment, the multi-layer perceptron α has a sigmoid activation as a final layer. It then computes opponent latent weights W₂=1-W₁ with ${W}_{2} ∈ {ℝ}^{t \times d 1}$^{.} Other implementations could be envisaged to compute the relevant and opponent latent weights.

Here, the modeling module NULL computes relevant and opponent latent weights W₁ and W₂ using a an uncertainty estimator (the multilayer perceptron α). If weights W₁ and W₂ are equivalent, there is no correlation between past observations and future events. On the contrary, if weights W₁ and W₂ are divergent, past observations are correlated with future events.

Second, the modeling module NULL computes embeddings β₁, β₂ as Hadamard products HP between the embeddings e_{T} and the latent weights W₁, W₂ respectively (i.e., β₁ = e_{T ·}W₁ and β₂ = e_{T ·}W₂).

Third, it computes the embeddings θ₁, θ₂ using attention modules CA taking respectively as input embeddings β₁, β₂ (as keys K and values V) and the object embeddings e_{O} (as queries Q). That is, θ₁ = CA(β₁, e_{O}) and θ₂ = CA(β₂, e_{O}) with ${θ}_{1} ∈ {ℝ}^{t}$ ^{× d1} and ${θ}_{2} ∈ {ℝ}^{t \times d 1}$. It thereby associates the object-centric spatial interaction embeddings e_{O} to each scene-centric temporal interaction embeddings e_{T}.

The embeddings θ₁, θ₂ encode the relationships between past observations (in past frames) and future anomalies (in future frames). The modeling module thereby allows learning the uncertainty in normal observations with regards to future events.

By using the normalcy uncertainty latent learner NULL to capture and model the relationships between past observations (i.e. in past images) and future anomalies (i.e. in future images), the proposed machine learning model MOD allows predicting reliably anomalies in future frames of the video.

We present below how the future decoder FTR_DEC uses the embeddings θ₁, θ₂ to predict anomalies.

**FIG. 6** illustrates the architecture of a decoder of the machine learning model according to an embodiment of the invention.

The future decoder FTR_DEC computes anomaly scores AS for future frames Fₜ₀₊₁,...,F_{t0+N'} of the video VID based on the embeddings θ₁, θ₂ provided by the past-encoder PST_ENC.

As shown in FIG. 6, the future decoder FTR_DEC also takes as input learnable tokens AQ (also referred to as "anticipation queries"). Each of the learnable tokens AQ are respectively associated with each of the M anomaly classes considered - with have $AQ ∈ {ℝ}^{M \times d 1}$. These tokens are randomly initialized and set during the training of the machine learning model MOD.

More specifically, in the embodiment of FIG. 6, the future decoder FTR_DEC proceeds as follows:
First, the future decoder FTR_DEC computes embeddings π₁, π₂ using self-attention modules SA taking as input learnable tokens AQ.

Second, it computes embeddings Δ₁ and Δ₂ using cross-attention modules CA taking as input respectively embeddings θ₁, θ₂ (as keys K, and values V) and embeddings π₁, π₂ (as queries Q). That is, Δ₁=CA(θ₁, π₁) and Δ₂=CA(θ₂, π₂).

Third, the future decoder FTR_DEC computes the anomaly scores $AS ∈ {ℝ}^{M}$ for the future frames using a classifier CLA taking as input a concatenation CNC of the embeddings Δ₁ and Δ₂.

The decoder uses self-attention and cross-attention modules to learn the relationships between the past observations and future anomalies The proposed future decoder thereby contributes to predicting reliably anomalies in the future frames of the video.

Before presenting the training method for the machine learning model, we briefly describe the self-attention and cross-attention modules in reference to following figures.

**FIGS. 7A and 7B** illustrate the architectures of a self-attention module and a cross-attention module of the machine learning model according to an embodiment of the invention.

The self-attention modules SA and cross-attention modules CA are used in different modules of the proposed machine learning model MOD. Although these modules are standard operators, we briefly describe their architecture below.

The self-attention module SA, as shown in FIG. 7A, takes as input embedding Xᵢₙ.

This embedding Xᵢₙ is provided as input to a multi-head attention module in combination with a positional embedding PE. The multi-head attention module used here is standard and corresponds to the one presented in Vaswani et al., "Attention Is All You Need", 2017*.*

The embedding Xᵢₙ is also provided as input to the module Add&Norm that follows the multi-head attention module. The output of the module Add&Norm is then supplied to a feed forward network FFN to obtain the output embedding Xₒᵤₜ.

The cross-attention module CA, as shown in FIG. 7B, takes as input embeddings Xᵢₙ and Yᵢₙ.

The embeddings Xᵢₙ and Yᵢₙ are provided as input to a multi-head attention module (Xᵢₙ as key K and value V, and Yᵢₙ as query Q). The embedding Xᵢₙ is also provided as input to the module Add&Norm that follows the multi-head attention module. The output of the module Add&Norm is then supplied to a feed forward network FFN to obtain the output embedding XYₒᵤₜ.

We have presented above the architecture and operation of the proposed machine learning model MOD, we now describe its training.

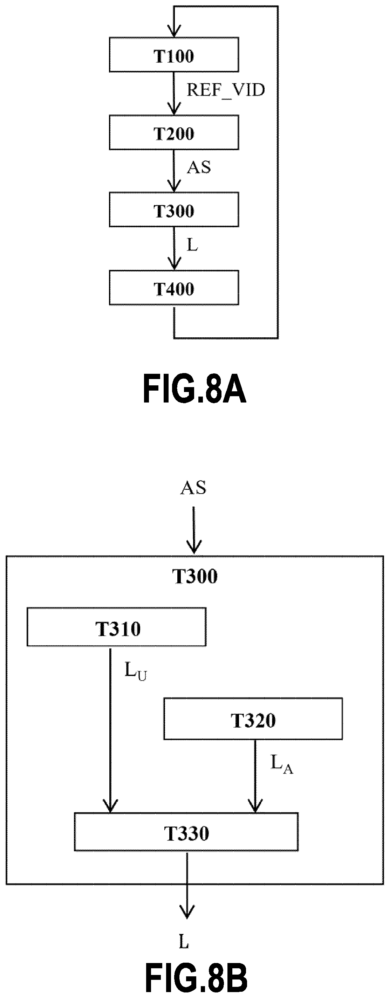

**FIG. 8A** illustrates steps of a method for training a machine learning model according to an embodiment of the invention.

As shown in this figure, the proposed training method comprises (all or part of) the following steps T100-T400, and may include one or more iterations of each of these steps.

At step T100, a set of reference videos REF_VID is obtained. This set includes reference videos VA comprising labelled anomalies.

At step T200, one or more anomaly scores AS are predicted for future frames of the reference videos REF_VID. The anomaly scores AS are obtained using the proposed machine learning model MOD by implementing the steps S100-S300 previously described.

At step T300, a loss function L is evaluated using the predicted anomaly scores AS and the labels of the reference videos REF_VID. The implementation of this step is further detailed hereafter in reference to FIG. 8B.

At step T400, parameters of the machine learning model MOD are updated to minimize the loss function L.

The proposed loss function L is used to train the machine learning model MOD in an end-to-end manner. That is, the different modules of the proposed model MOD are jointly optimized to minimize the loss function L (except for the pre-trained feature extractor CLIP_ENC).

For example, the proposed model MOD can be implemented using a neural network, and the weights of the neural network can be updated using backpropagation (except for pre- trained feature extractor CLIP_ENC). Such an update of the weights is *per se* known to the skilled person.

Other parameters of the machine learning model MOD could also be updated to minimize the loss function L, such as the number of neurons, or the number of layers.

We have given above a general description of the proposed method for training the machine learning model MOD. We detail below the proposed loss function L.

**FIG. 8B** illustrates steps of a method for training a machine learning model according to an embodiment of the invention.

This figure details the implementation of step T300 previously introduced in which the loss function L is evaluated. As shown in this figure, the step T300 comprises (all or part of) the following steps T310-T330.

At step T310, a calibration loss function L_{U} is evaluated based on the predicted anomaly scores AS (obtained at step T200) and respectively the embeddings θ₁, θ₂ provided by the modelling module NULL.

Specifically, the calibration loss function L_{U} is evaluated as follows: L_{U} = ∥Σₜ(θ₁) - Â∥ + ∥Σₜ(θ₂) - Â∥, wherein Â are the predicted anomaly scores AS. In some embodiments, we have d1=M such that the dimension of Σₜ(θ₁) matches that of Â.

The calibration loss function L_{U} ensures improved calibration of the relevant and opponent embeddings θ₁, θ2 provided by the modeling module NULL (the normalcy uncertainty latent learner), in order to reduce the differences between these embeddings and the anomaly scores AS predicted for future frames.

At step T320, an anticipation loss function L_{A} is evaluated based on a standard cross entropy between the predicted anomaly scores AS (obtained at step T200) and the labels of the reference videos REF_VID.

The anticipation loss function L_{A} contributes to optimizing the machine learning model MOD to reliably predict the presence of anomalies in the future frames of the video based on the past frames of the video.

At step T330, the loss function L is evaluated based on a weighted sum of the calibration loss function L_{U} and the anticipation loss function L_{A}, as follows: L= λ₁·L_{U}+ λ₂·L_{A}, where λ₁ and λ₂ are positive real coefficients (e.g., λ₁=0.5 and λ₂=0.5).

The proposed loss function L combines the calibration loss function L_{U} and the anticipation loss function L_{A}, and benefits from their respective advantages. It follows that the proposed loss function L allows optimizing the machine learning model MOD to reliably predict anomalies.

Experimental results show that the proposed machine learning model MOD, once trained, can reliably predict the presence of anomalies in future frames of a video. We present below these experimental results.

**Tables 1-4** illustrate experimental results related to the proposed machine learning model for predicting an anomaly in a video according to embodiments of the invention.

Here, the performance of the proposed machine learning model MOD is evaluated using a new dataset and a new evaluation protocol. Before presenting the results of these experiments, we first present the proposed dataset and evaluation protocol.

The proposed dataset is hereinafter noted AHB-F for abnormal human behavior forecast dataset.

It comprises real-world videos with actual anomaly occurrences with dynamic backgrounds (such as streets, shops, corridor, banks etc.). The proposed dataset includes videos containing 26 categories of human anomalies recorded in video surveillance scenarios.

The proposed dataset AHB-F is based on multiple major real-world video surveillance datasets (including the UCF-Crime, LAD-2000, UCF-CrimeV2, UBI, CCTV-Fight datasets) and selects the abnormal videos where the anomaly is triggered by (or impacts) human beings.

To ensure that the evaluation protocol is unbiased, 75% of the videos for each anomaly category are reserved for training and 25% of the videos are reserved for testing.

The proposed evaluation protocol provides a robust evaluation that fulfills our objective of predicting anomalies based on normal observations.

All videos frames prior to a reference time instant Dref are defined as past observation frames, and all videos frames posterior to the reference time instant Dref are defined as future prediction frames. The reference time instant Dref in a video is placed such that the past observation frames contain only normal frames (without any anomaly) and the future prediction frames contain a mixture of both anomaly and normal frames.

The proposed evaluation protocol uses as a metric the frame-level Top-1 mean average precision (abbreviated hereinafter Top-1 mAP). This metric is evaluated at the frame level using the maximum (i.e., the Top-1) of the predicted anomaly scores AS. This metric allows evaluating the reliability of the predictions of the proposed solution and the existing ones.

It is also important to note that the proposed solution and existing solutions are evaluated for different future prediction time periods as presented in the experimental results below.

**Table 1** compares the performance of the proposed machine learning model MOD with regard to state-of-the-art solutions. It evaluates the performance of the solutions for different prediction time periods (i.e., for different number of future frames).

**Table 1**

| **Solutions** | **Short (Top-1 mAP %)** | | | | **Long (Top-1 mAP %)** | | |
|---|---|---|---|---|---|---|---|
| | **1 sec.** | **2 sec.** | **3 sec.** | **Avg** | **4 sec.** | **5 sec.** | **Avg** |
| JOADAA | 62.79 | 62.79 | 62.53 | 62.70 | 62.00 | 57.51 | 59.75 |
| TesTra | 63.85 | 63.32 | 62.80 | 63.32 | 62.53 | 59.10 | 60.81 |
| Proposed | **65.96** | **64.64** | **63.85** | **64.81** | **63.85** | **59.63** | **61.74** |

In this table, the proposed solution is compared with existing action anticipation solutions. JOADAA refers to the solution proposed in Guermal et al., "Joint online action detection and action anticipation", January 2024. And, TesTra refers to the solution proposed in Zhao et al., "Real-time online video detection with temporal smoothing transformers", 2022*.*

This tables shows that the proposed solution achieves better performance (at least +1.15%) than JOADAA, a pure transformer-based solution. It also shows that the proposed solution achieves better performance (at least +0.40%) than TesTra, a memory-based solution.

Altogether, the proposed machine learning model MOD predicts anomalies in future video frames more reliably than existing solutions.

**Table 2** presents the results of an ablation study for the different modules of the proposed machine learning model MOD. It evaluates the contribution of each module to the performance of the proposed model MOD.

**Table 2**

| **Scene** | | **Object** | | **NULL** | **Top-1 mAP %** | |
|---|---|---|---|---|---|---|
| **SE** | **SIM** | **OE** | **OIM** | | **Short** | **Long** |
| ✔ | - | - | - | - | 54.32 | 50.71 |
| ✔ | ✔ | - | - | - | 56.21 | 53.54 |
| - | - | ✔ | - | - | 51.33 | 48.63 |
| - | - | ✔ | ✔ | - | 55.82 | 50.11 |
| ✔ | ✔ | ✔ | ✔ | - | 59.47 | 58.06 |
| ✔ | ✔ | ✔ | ✔ | ✔ | **64.81** | **61.74** |

As a baseline for these experiments, we present the initial performance by stacking the future decoder FTR_DEC on top of the scene encoder SE and the object encoder OE. Then, the temporal interaction module T-IM and the object interaction module O-IM are independently incorporated to the respective baseline.

For the temporal interaction module T-IM, the obtained performance gains are +2% and +3% for short predictions (1-3 seconds) and long predictions (4-8 seconds). This illustrates the relevance of temporal interaction for long-term anomaly prediction.

For the object interaction module O-IM, the obtained performance gains are +4.5% and +1.5% for short and long predictions. This corroborates the relevance of encoding the object interactions for short-term anomaly prediction.

This table furthermore shows that, when the temporal interaction module T-IM and the object interaction module O-IM are used together, a performance gain of at least +8.5% is obtained in comparison with the initial baseline.

Next, the modelling module NULL (the normalcy uncertainty latent learner) is integrated in addition to the interaction modules T-IM and O-IM. A performance gain of at least +3.5% is obtained for short and long predictions.

**Table 3** presents experimental results regarding the performance of the machine learning model MOD for different numbers of past frames analysed.

**Table 3**

| **Number of Past Frames** | **Top-1 mAP %** | |
|---|---|---|
| | **Short** | **Long** |
| 50 | 56.11 | 47.30 |
| 100 | 61.26 | 55.65 |
| 150 | 63.93 | 59.97 |
| **200** | **64.81** | **61.74** |
| 250 | 63.52 | 60.11 |
| 300 | 61.06 | 58.11 |
| 350 | 61.06 | 56.24 |

The results in this table show that, up to 200 frames, the performance of the proposed machine learning model MOD improves as more frames are used. Then, above 200 frames, the performance degrades.

Therefore, in one embodiment, the proposed machine learning model MOD uses between 150 and 250 past frames to predict anomalies.

**Table 4** presents simulation results regarding the use of object-level textual feature map F_{Txt} by the proposed machine learning model MOD.

**Table 4**

| **Text** | **w/o Text** | **Top-1 mAP %** | |
|---|---|---|---|
| | | **Short** | **Long** |
| ✔ | - | **64.81** | **61.47** |
| - | ✔ | 62.53 | 60.97 |

This table shows that the use of textual semantics (i.e., the object-level textual feature map Fₜₓₜ₎ significantly improves the performance of the proposed solution by at least +1.5% for both short and long predictions.

**Additional Variants:** Although the present invention has been described above with reference to certain specific embodiments, it will be understood that the invention is not limited by the particularities of these embodiments. Numerous variations, modifications, and developments may be made in these embodiments within the scope of the claims.

## Claims

1. A computer-implemented method for predicting one or more anomaly scores (AS) for future frames (Fₜ₀₊₁,...,F_{t0+N'}) of a video (VID) following a given time instant (t0) using a machine learning model (MOD) based only on past frames (F_{t0-N},...,Fₜ₀) of the video (VID) preceding the given time instant (t0), wherein:
- a modeling module (NULL) of the machine learning model (MOD):
o computes latent weights W₁ using a multi-layer perceptron (α) based on embeddings e_{T} of the past frames (F_{t0-N},...,Fₜ₀), and computes latent weights W₂ based on the opposite of the latent weights W₁,
o computes embeddings θ₁, θ₂ of the past frames (F_{t0-N},...,Fₜ₀) using attention modules (CA) based on embeddings β₁, β₂ being products between the embeddings e_{T} of the past frames (F_{t0-N},...,Fₜ₀) and the latent weights W₁, W₂ respectively, and
- the machine learning model (MOD):
o computes the anomaly scores (AS) for the future frames (Fₜ₀₊₁,...,F_{t0+N'}) based on the embeddings θ₁, θ₂ of the past frames (F_{t0-N},...,Fₜ₀).

2. The method according to claim 1, wherein:
- a temporal interaction module (T-IM) of the machine learning model (MOD):
o computes scene embeddings τ₁ using a self-attention module (SA) based on a scene-level feature map Fs of the past frames (F_{t0-N}, ..., Fₜ₀),
o computes object embeddings τ₂ using a self-attention module (SA) based on an object feature map F_{O} of the past frames (F_{t0-N}, ..., Fₜ₀), and
o computes the embeddings e_{T} of the past frames (F_{t0-N}, ..., Fₜ₀) using a cross-attention module (CA) based on the scene embeddings τ₁ and the object embeddings τ₂.

3. The method according to claim 2, wherein:
- an object interaction module (O-IM) of the machine learning model (MOD):
∘ computes object-level textual embeddings Θ₁ using a self-attention module (SA) based on an object-level textual feature map Fₜₓₜ of the past frames (F_{t0-N}, ..., Fₜ₀),
o computes object embeddings Θ₂ using a self-attention module (SA) based on object feature map F_{O} of the past frames (F_{t0-N}, ..., Fₜ₀),
o computes embeddings e_{O} of the past frames (F_{t0-N}, ..., Fₜ₀) using a cross-attention module (CA) based on the object-level textual embeddings Θ₁ and object embeddings Θ₂, and
- the modeling module (NULL) of the machine learning model (MOD):
o computes the embeddings θ₁, θ₂ of the past frames (F_{t0-N}, ..., Fₜ₀) using the cross-attention modules (CA) based on respectively the embeddings β₁, β₂ and the embeddings e_{O} of the past frames (F_{t0-N}, ..., Fₜ₀).

4. The method according to any of claims 1 to 3, wherein the machine learning model (MOD) comprises:
- an encoder (PST_ENC) comprising the modeling module (NULL), and
- a decoder (FTR_DEC) computing the anomaly scores (AS) for the future frames (Fₜ₀₊₁, ..., F_{t0+N'}) based on the embeddings θ₁, θ₂ of the past frames (F_{t0-N}, ..., Fₜ₀) provided by the encoder (PST_ENC).

5. The method according to claim 4, wherein:
- the decoder (FTR_DEC) of the machine learning model (MOD):
o computes embeddings π₁, π₂ using self-attention modules (SA) based on tokens (AQ) respectively associated with different classes of anomalies,
o computes embeddings Δ₁ and Δ₂ using cross-attention modules (CA) based on respectively the embeddings θ₁, θ₂ of the past frames (F_{t0-N}, ..., Fₜ₀) and the embeddings π₁, π₂, and
o computes the anomaly scores (AS) for the future frames (Fₜ₀₊₁, ..., F_{t0+N'}) using a classifier based on the embeddings Δ₁ and Δ₂.

6. The method according to any of claims 1 to 5, wherein the number of past frames (F_{t0-N}, ..., Fₜ₀) used to predict the anomaly scores (AS) for the future frames (Fₜ₀₊₁, ..., F_{t0+N'}) is comprised between 150 and 250.

7. The method according to any of claims 1 to 6, wherein the predicted anomaly scores (AS) are representative of the likelihood of one or more anomalies involving humans in future frames (Fₜ₀₊₁, ..., F_{t0+N'}) of the video (VID).

8. A computer-implemented method comprising:
- a step of predicting (S100-S300), using the method according to any of claims 1 to 7, one or more anomaly scores (AS) for future frames (Fₜ₀₊₁,...,F_{t0+N'}) of a video (VID) following a given time instant (t0) based only on past frames (F_{t0-N},...,Fₜ₀) of the video (VID) preceding the given time instant (t0), and
- a step of generating (S400) an alert (ALM) if one of the predicted anomaly scores (AS) exceeds a threshold.

9. A computer-implemented method for training a machine learning model (MOD) comprising:
- a step of predicting (T200) one or more anomaly scores (AS) for future frames of reference videos (REF_VID) using the method according to any of claims 1 to 7,
- a step of evaluating (T300) a loss function L using the predicted anomaly scores (AS) and labels of the reference videos (REF_VID), and
- a step of updating (T400) parameters of the machine learning model (MOD) to minimize the loss function L.

10. The method according to claim 9, wherein:
- the loss function L is based on a loss function L_{U} comprising differences between the predicted anomaly scores (AS) and respectively the embeddings θ₁, θ₂ provided by the modeling module (NULL) of the machine learning model (MOD), and/or
- the loss function L is based on a loss function L_{A} based on a cross entropy between the predicted anomaly scores (AS) and labels of the reference videos (REF_VID).

11. A machine learning model (MOD) for predicting one or more anomaly scores (AS) for future frames (Fₜ₀₊₁,...,F_{t0+N'}) of a video (VID) subsequent to a given time instant (t0) based only on past frames (F_{t0-N},...,Fₜ₀) of the video (VID) preceding the given time instant (t0), wherein:
- a modeling module (NULL) of the machine learning model (MOD) is configured to:
o compute latent weights W₁ using a multi-layer perceptron (α) based on embeddings e_{T} of the past frames (F_{t0-N},...,Fₜ₀), and computes latent weights W₂ based on the opposite of the latent weights W₁,
o compute embeddings θ₁, θ₂ of the past frames (F_{t0-N},...,Fₜ₀) using attention modules (CA) based on embeddings β₁, β₂ being products between the embeddings e_{T} of the past frames (F_{t0-N},...,Fₜ₀) and the latent weights W₁, W₂ respectively, and
- the machine learning model (MOD) is configured to:
o compute the anomaly scores (AS) for the future frames (Fₜ₀₊₁,...,F_{t0+N'}) based on the embeddings θ₁, θ₂ of the past frames (F_{t0-N},...,Fₜ₀).

12. A device (APP) comprising at least one processor (PROC) and a memory (MEM), the device (APP) being configured to implement a machine learning model (MOD) according to claim 11.

13. A surveillance system (SYS) comprising:
- a camera (CAM) for obtaining a video (VID); and
- a device (APP) according to claim 12 for analysing the video (VID).

14. A computer program (PROG) comprising instructions which, when the program (PROG) is executed by at least one processor (PROC), cause said at least one processor (PROC) to implement the method according to any of claims 1 to 10.

15. A computer-readable medium (MEM) having stored thereon the computer program (PROG) according to claim 14.

## Amended claims

### Amended claims in accordance with Rule 137(2) EPC.

1. A computer-implemented method for predicting one or more anomaly scores (AS) for future frames (Fₜ₀₊₁,...,F_{t0+N'}) of a video (VID) following a given time instant (t0) using a machine learning model (MOD) based only on past frames (F_{t0-N},...,Fₜ₀) of the video (VID) preceding the given time instant (t0), **characterized in that**:
- the machine learning model (MOD) comprises an encoder (PST_ENC) comprising a modeling module (NULL), wherein the modeling module (NULL):
o computes latent weights W₁ using a multi-layer perceptron (α) based on embeddings e_{T} of the past frames (F_{t0-N},...,Fₜ₀), and computes latent weights W₂ based on the opposite of the latent weights W₁,
o computes embeddings θ₁, θ₂ of the past frames (F_{t0-N},...,Fₜ₀) using attention modules (CA) based on embeddings β₁, β₂ being products between the embeddings e_{T} of the past frames (F_{t0-N},...,Fₜ₀) and the latent weights W₁, W₂ respectively, and
- the machine learning model (MOD) comprises a decoder (FTR_DEC), wherein the decoder (FTR_DEC):
o computes embeddings π₁, π₂ using self-attention modules (SA) based on tokens (AQ) respectively associated with different classes of anomalies,
o computes embeddings Δ₁ and Δ₂ using cross-attention modules (CA) based on respectively the embeddings θ₁, θ₂ of the past frames (F_{t0-N}, ..., Fₜ₀) and the embeddings π₁, π₂, and
o computes the anomaly scores (AS) for the future frames (Fₜ₀₊₁, ..., F_{t0+N'}) using a classifier based on the embeddings Δ₁ and Δ₂.

2. The method according to claim 1, wherein:
- a temporal interaction module (T-IM) of the machine learning model (MOD):
o computes scene embeddings τ₁ using a self-attention module (SA) based on a scene-level feature map F_{S} of the past frames (F_{t0-N}, ..., Fₜ₀),
o computes object embeddings τ₂ using a self-attention module (SA) based on an object feature map F_{O} of the past frames (F_{t0-N}, ..., Fₜ₀), and
o computes the embeddings e_{T} of the past frames (F_{t0-N}, ..., Fₜ₀) using a cross-attention module (CA) based on the scene embeddings τ₁ and the object embeddings τ₂.

3. The method according to claim 2, wherein:
- an object interaction module (O-IM) of the machine learning model (MOD):
o computes object-level textual embeddings Θ₁ using a self-attention module (SA) based on an object-level textual feature map Fₜₓₜ of the past frames (F_{t0-N}, ..., Fₜ₀),
o computes object embeddings Θ₂ using a self-attention module (SA) based on object feature map F_{O} of the past frames (F_{t0-N}, ..., Fₜ₀),
o computes embeddings eo of the past frames (F_{t0-N}, ..., Fₜ₀) using a cross-attention module (CA) based on the object-level textual embeddings Θ₁ and object embeddings Θ₂, and
- the modeling module (NULL) of the machine learning model (MOD):
o computes the embeddings θ₁, θ₂ of the past frames (F_{t0-N}, ..., Fₜ₀) using the cross-attention modules (CA) based on respectively the embeddings β₁, β₂ and the embeddings eo of the past frames (F_{t0-N}, ..., Fₜ₀).

4. The method according to any of claims 1 to 3, wherein the number of past frames (F_{t0-N}, ..., Fₜ₀) used to predict the anomaly scores (AS) for the future frames (Fₜ₀₊₁, ..., F_{t0+N'}) is comprised between 150 and 250.

5. The method according to any of claims 1 to 4, wherein the predicted anomaly scores (AS) are representative of the likelihood of one or more anomalies involving humans in future frames (Fₜ₀₊₁, ..., F_{t0+N'}) of the video (VID).

6. A computer-implemented method comprising:
- a step of predicting (S100-S300), using the method according to any of claims 1 to 5, one or more anomaly scores (AS) for future frames (Fₜ₀₊₁,...,F_{t0+N'}) of a video (VID) following a given time instant (t0) based only on past frames (F_{t0-N},...,Fₜ₀) of the video (VID) preceding the given time instant (t0), and
- a step of generating (S400) an alert (ALM) if one of the predicted anomaly scores (AS) exceeds a threshold.

7. A computer-implemented method for training a machine learning model (MOD) comprising:
- a step of predicting (T200) one or more anomaly scores (AS) for future frames of reference videos (REF_VID) using the method according to any of claims 1 to 5,
- a step of evaluating (T300) a loss function L using the predicted anomaly scores (AS) and labels of the reference videos (REF_VID), and
- a step of updating (T400) parameters of the machine learning model (MOD) to minimize the loss function L.

8. The method according to claim 7, wherein:
- the loss function L is based on a loss function L_{U} comprising differences between the predicted anomaly scores (AS) and respectively the embeddings θ₁, θ₂ provided by the modeling module (NULL) of the machine learning model (MOD), and/or
- the loss function L is based on a loss function L_{A} based on a cross entropy between the predicted anomaly scores (AS) and labels of the reference videos (REF_VID).

9. A machine learning model (MOD) for predicting one or more anomaly scores (AS) for future frames (Fₜ₀₊₁,...,F_{t0+N'}) of a video (VID) subsequent to a given time instant (t0) based only on past frames (F_{t0-N},...,Fₜ₀) of the video (VID) preceding the given time instant (t0), **characterized in that**:
- the machine learning model (MOD) comprises an encoder (PST_ENC) comprising a modeling module (NULL), wherein the modeling module (NULL) is configured to:
o compute latent weights W₁ using a multi-layer perceptron (α) based on embeddings e_{T} of the past frames (F_{t0-N},...,Fₜ₀), and computes latent weights W₂ based on the opposite of the latent weights W₁,
o compute embeddings θ₁, θ₂ of the past frames (F_{t0-N},...,Fₜ₀) using attention modules (CA) based on embeddings β₁, β₂ being products between the embeddings e_{T} of the past frames (F_{t0-N},...,Fₜ₀) and the latent weights W₁, W₂ respectively, and
- the machine learning model (MOD) comprises a decoder (FTR_DEC), wherein the decoder (FTR_DEC) is configured to:
o computes embeddings π₁, π₂ using self-attention modules (SA) based on tokens (AQ) respectively associated with different classes of anomalies,
o computes embeddings Δ₁ and Δ₂ using cross-attention modules (CA) based on respectively the embeddings θ₁, θ₂ of the past frames (F_{t0-N}, ..., Fₜ₀) and the embeddings π₁, π₂, and
o computes the anomaly scores (AS) for the future frames (Fₜ₀₊₁, ..., F_{t0+N'}) using a classifier based on the embeddings Δ₁ and Δ₂.

10. A device (APP) comprising at least one processor (PROC) and a memory (MEM), the device (APP) being configured to implement a machine learning model (MOD) according to claim 9.

11. A surveillance system (SYS) comprising:
- a camera (CAM) for obtaining a video (VID); and
- a device (APP) according to claim 10 for analysing the video (VID).

12. A computer program (PROG) comprising instructions which, when the program (PROG) is executed by at least one processor (PROC), cause said at least one processor (PROC) to implement the method according to any of claims 1 to 8.

13. A computer-readable medium (MEM) having stored thereon the computer program (PROG) according to claim 12.
